# EUROPEAN PATENT SPECIFICATION

(11) **EP 0 440 831 B1**
(45) Date of publication and mention of the grant of the patent: **08.09.1993**
(21) Application number: 90102195.6
(22) Date of filing: 05.02.1990
(51) Int. Cl.: F16J 15/08

(54) **A steel laminate gasket**
Laminierte Stahldichtung
Joint d'étanchéité en acier laminé

(43) Date of publication of application: 14.08.1991
(73) Proprietor: ISHIKAWA GASKET CO. LTD., Tokyo (JP)
(72) Inventor: Udagawa, Tsunekazu, Ichikawa-shi (JP)
(74) Representative: Kraus, Walter, Dr.

(56) References cited:
- GB-A- 1 549 200
- US-A- 4 799 695

## Description

### Background of the Invention and Related Art Statement

The present invention relates to a steel laminate gasket for an internal combustion engine to securely seal around cylinder holes and through holes.

An internal combustion engine is provided with a plurality of cylinder holes and other holes, such as holes for bolt, water, oil and push rod. When an engine is actuated, high pressure and high temperature are applied to the cylinder holes due to combustion of a fuel, while relatively low pressure and low temperature are applied to the other holes.

In order to properly seal between two engine blocks, such as cylinder head and cylinder block, of an engine, a gasket is situated between the two engine blocks and is tightened so that areas around the cylinder holes as well as the other holes are securely sealed. However, since the sealing conditions around the cylinder holes and other holes are different as explained above, it is not easy to securely seal around all the holes.

It has been known that beads are formed around the cylinder holes and other holes to securely seal around the holes. However, in case the beads are simply formed, sealing can not be perfectly made. Namely, while an engine is actuated, leakage may happen around the cylinder holes and other holes.

In some cases, seal rings may be separately attached around holes for water and oil. However, since the seal rings are separately prepared and installed in the gasket, it requires additional cost. Therefore, this method is not practical.

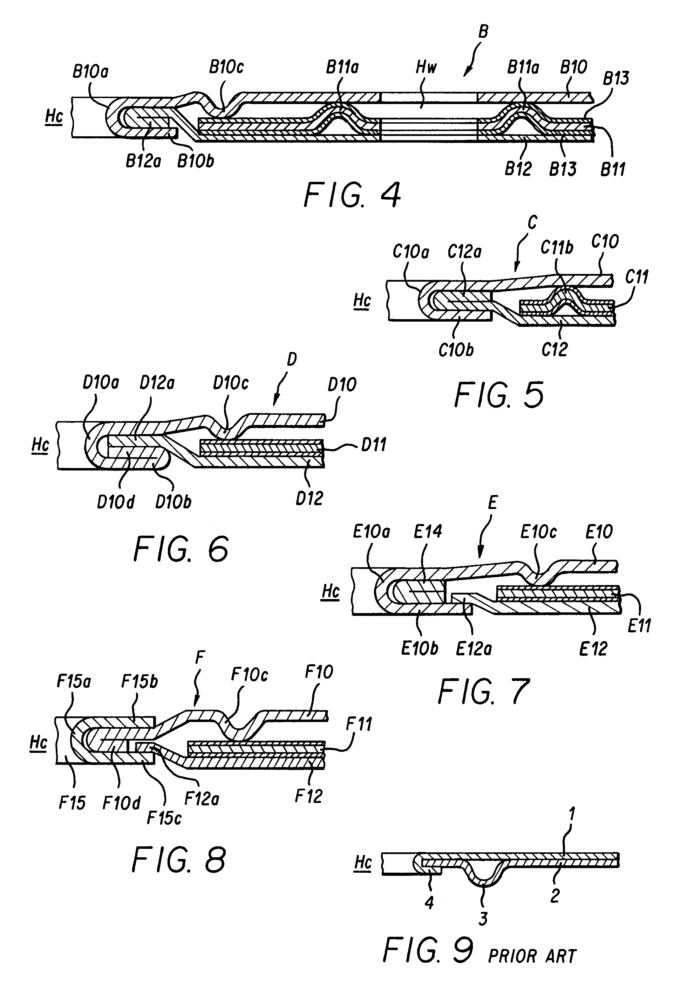

In US-A-4,799,695, a metal laminate gasket is formed of an upper plate 1, and a lower plate 2 with a bead 3, as shown in Fig. 9 of the drawings filed herewith. An end of the upper plate 1 is folded and located under the lower plate 2 to form a flange 4. When this gasket is tightened between a cylinder head and a cylinder block, since an area on the flange 4 is formed of three plates and the rest of the portion is formed of two plates though the lower plate 2 has the bead 3, the cylinder head inclines relative to the cylinder block. Therefore, this structure is not practical.

Moreover, figure 8 of US-A-4,799,695 corresponds to the preamble of Claim 1 and shows additionally, a third means (being a bead 36) for resiliently sealing around the cylinder hole, which bead is formed on one of the three plates constituting the gasket, and that the third hole of the third plate 34 is larger than the first sealing means 44^{a}.

Accordingly, an object of the present invention is to provide a steel laminate gasket which can seal properly around all kinds of holes in an engine.

Another object of the invention is to provide a steel laminate gasket as stated above, in which an area around a cylinder hole can be sealed strongly for a relatively wide width.

A further object of the invention is to provide a steel laminate gasket as stated above, in which sealing pressure around holes can be easily changed.

Further objects and advantages of the invention will be apparent from the following description of the invention.

### Summary of the Invention

A steel laminate gasket of the invention as defined in claim 1 is installed in an internal combustion engine having at least one cylinder hole and at least one through hole therein. The gasket comprises a first plate, a second plate situated under the first plate and a third plate situated between the first and second plates. The third plate is not located adjacent to the cylinder hole.

The gasket further comprises first means for sealing around the cylinder hole without elasticity, second means for covering at least the first means around the cylinder hole, and third means for resiliently sealing around the cylinder hole. The third means is formed on at least one of the first, second and third plates outside the second means relative to the cylinder hole.

The gasket may further include fourth means for sealing around the through hole of the engine. The fourth means is formed on at least one of the first, second and third plates to securely seal around the through hole.

The first means is a steel plate in the form of a ring. The first means may be integrally formed with the first or second plate, or may be separately formed. The second means may be a grommet, or may be formed of a curved portion and a flange, which are integrally formed with the first or second plate. The first means is retained inside the second means to thereby form a solid portion around the cylinder hole.

The third means is at least one bead, which is formed on at least one of the first, second and third plates outside the second means relative to the cylinder hole. The fourth means is at least one bead formed on at least one of the first, second and third plates and situated around the through hole.

In the gasket of the present invention, the flat solid portion is situated around the cylinder hole, and at least one bead is situated outside the solid portion. Therefore, the gasket can be strongly tightened without deformation of a cylinder block or cylinder head, and also the bead can resiliently seal around the cylinder hole outside the solid portion.

Further, the third plate does not extend into the solid portion. Therefore, although resiliency of the bead may be changed by changing the thickness of the solid portion or the first and second plate, the resiliency of the bead can be easily changed by changing the thickness of the third plate.

Still further, since the third plate does not extend near the cylinder hole, sealing layers having a low heat resistance but being effective to fluid can be coated on both sides of the third plate. As a result, fluid passing through the through hole can be effectively sealed, and does not enter into spaces between the plates.

### Brief Description of the Drawings

Fig. 1 is a partial plan view of a first embodiment of a steel laminate gasket of the present invention;
Fig. 2 is an enlarged section view taken along line 2-2 in Fig. 1;
Fig. 3 is a section view showing tightened condition of the gasket as shown in Fig. 2;
Fig. 4 is a section view, similar to Fig. 2, of a second embodiment of a steel laminate gasket of the invention;
Figs. 5-8 are section views showing sealing structures around cylinder holes of third to sixth embodiments of the steel laminate gasket of the invention; and
Fig. 9 is a section view around a cylinder hole of a conventional gasket.

### Detailed Description of Preferred Embodiments

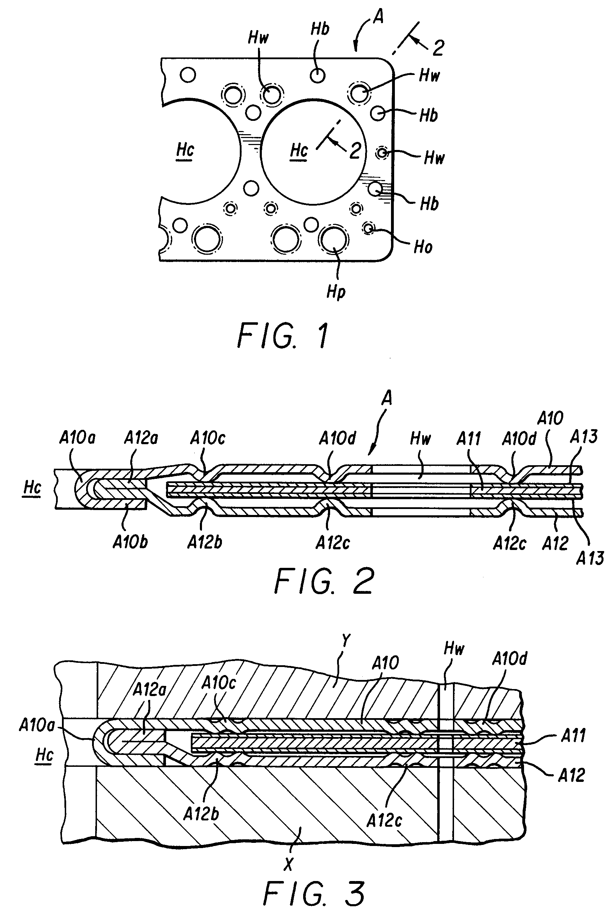

Referring to Figs. 1-3, a first embodiment A of a steel laminate gasket of the present invention is shown. The gasket A is provided with cylinder holes Hc, bolt holes Hb, water holes Hw, oil holes Ho and push rod holes Hp, as in the conventional gasket. The areas around the water holes Hw, oil holes Ho and push rod holes Hp are sealed in the same manner. For convenience, the cross section of the water hole Hw and cylinder hole Hc is shown in Fig. 2.

As shown in Fig. 2, the gasket A comprises an upper plate A10, a lower plate A12 and a middle plate A11 situated between the upper and lower plates A10, A12. The upper plate A10 includes a hole for the water hole Hw, a hole for the cylinder hole Hc, and a curved portion A10a to define the cylinder hole Hc. A flange A10b extends from the curved portion A10a in the direction away from the cylinder hole Hc.

The upper plate A10 is also provided with a bead A10c around the cylinder hole Hc, which is located outside the flange A10b. The bead A10c seals around the cylinder hole Hc. Further, a bead A10d is formed around the water hole Hw to seal therearound.

The lower plate A12 includes a hole for the water hole Hw and a hole for the cylinder hole Hc. An end portion or core A12a of the lower plate A12 adjacent the cylinder hole Hc is turned or bent to form a core. The core A12a is situated to pile on the flange A10b.

The lower plate A12 is also provided with a bead A12b around the cylinder hole Hc, which is located outside the flange A10b to correspond to the bead A10c. The bead A12b also seals around the cylinder hole Hc. Further, a bead A12c is formed around the water hole Hw to correspond to the bead A10d for sealing around the water hole Hw.

The middle plate A11 includes a hole for the water hole Hw and a hole for the cylinder hole Hc, which is larger than the cylinder hole Hc. Namely, the middle plate A11 does not extend adjacent the cylinder hole nor pile on the core A12a.

The middle plate A11 is also provided with upper and lower coatings A13 covering the entire surface thereof. The coatings A13 are made of a soft material to provide resiliency and seal around the water hole Hw. Gum, such as NBR gum and silicone gum is preferred, but soft resin may be used. The thickness of the coating A13 is 5-100 micra, preferably 10-50 micra. Alternatively, the coating A13 may be partly formed only around the required portion, such as a water hole.

When the gasket A is situated between a cylinder block X and a cylinder head Y and is tightened, as shown in Fig. 3, the curved portion A10a is bent, and the beads A10c, A10d on the upper plate A10 and the beads A12b, A12c on the lower plate A12 deform to form a plurality of corrugated beads, respectively.

In the gasket A, the core A12a and a part of the lower plate A12 are disposed between the flange A10b and a part of the upper plate A10 to form the flat solid portion. Therefore, even if the gasket A is tightened strongly, the cylinder head and cylinder block do not deform. Namely, the gasket A can be tightened strongly.

Further, since the gasket A is provided with the beads A10c, A12b outside the solid portion, when the gasket A is tightened, the beads A10c, A12b deform to securely seal around the cylinder hole Hc. Also, when the gasket A is tightened, the beads A10d, A12c deform to securely seal around the water hole Hw.

When an engine is operated, the engine vibrates, so that a gasket receives forces similar to beat the gasket, repeatedly. Therefore, beads around the cylinder hole are liable to suffer creep relaxation. In the present invention, the solid portion is formed adjacent the cylinder hole Hc, and the beads are formed outside the solid portion. Therefore, creep relaxation of the beads A10c, A12b is substantially prevented.

It is important in the present invention that the coating is made of a soft material, because the soft material seals properly between the plates to thereby prevent leakage of fluid from the water hole Hw. It is also important that the middle plate A11 does not extend to an area adjacent the cylinder hole Hc, because if the middle plate A11 extends to an area adjacent the cylinder hole Hc, the middle plate A11 is exposed to high temperature, which causes creep relaxation of the soft material formed on the middle plate A11. As a result, leakage may happen around the cylinder hole Hc.

Namely, an effective coating material around the water hole Hw has a low heat resistance. Therefore, such a coating material can not be applied onto a plate for sealing around the cylinder hole Hc. Accordingly, a middle plate which does not extend to an area adjacent the cylinder hole Hc is used, and a coating material effective to fluid is applied onto the middle plate.

Generally, small scratches are formed on outer surfaces of an engine block when manufacturing the engine block. In order to fill up the small scratches, coatings which are strong against heat may be formed on outer surfaces of the gasket. Therefore, in the present invention, thin coatings may be formed on the outer surfaces of the upper and lower plates A10, A12 which contacts the cylinder head and cylinder block.

Fig 4 shows a second embodiment B of a steel laminate gasket of the invention. The gasket B comprises an upper plate B10 with a curved portion B10a, a flange B10b and a bead B10c, a middle plate B11 with coatings B13, and a lower plate B12 with a core B12a, similar to the gasket A.

In the gasket B, however, the upper and lower plates B10, B12 do not have beads around the water hole Hw, and instead, the middle plate B11 is provided with a bead B11a. Also, the core B12a faces against the flange B10b, and the lower plate B12 does not have a bead around the cylinder hole Hc. The rest of the gasket B is the same as the gasket A. The gasket B operates as in the gasket A.

Fig. 5 shows a third embodiment C of a steel laminate gasket of the invention. The gasket C comprises an upper plate C10 with a curved portion C10a and a flange C10b, a middle plate C11 with a bead (not shown) around the water hole Hw, and a lower plate C12 with a core C12a, similar to the gasket B. However, in the gasket C, a bead around the cylinder hole Hc is not formed on the upper plate C10, and instead, a bead C11b is formed on the middle plate C11. The core C12a faces the upper plate C10, and the bead (not shown) orients toward the upper plate C10. The gasket C operates as in the gasket B.

In the gasket B, the bead B10c faces the middle plate, and in the gasket C, the bead C11b is formed on the middle plate C11. However, these beads may face engine parts, wherein relatively sharp sealing pressure is directly applied to the cylinder block or cylinder head.

Fig. 6 shows a fourth embodiment D of a steel laminate gasket of the invention. The gasket D comprises an upper plate D10 with a curved portion D10a, a flange D10b and a bead D10c, a middle plate D11 with a bead (not shown) around the water hole Hw, and a lower plate D12, similar to the gasket B.

However, the lower plate D12 does not have a core, and instead, a core D10d is integrally formed with the flange D10b. Namely, the core D10b is formed by bending the same to be located on the flange D10c. An end D12a of the lower plate D12 is located on the core D10d. The gasket D operates as in the gasket B.

Fig. 7 shows a fifth embodiment E of a steel laminate gasket of the invention. The gasket E comprises an upper plate E10 with a curved portion E10a, a flange E10b and a bead E10c, a middle plate E11 and a lower plate E12, as in the gasket B. However, in the gasket E, a core E14 is separately formed and is situated above the flange E10b. An end E12a of the lower plate E12 is placed above the flange E10b. The gasket E operates as in the gasket B.

Fig. 8 shows a sixth embodiment F of a steel laminate gasket of the invention. The gasket F comprises an upper plate F10 with a bead F10c, a middle plate F11 and a lower plate F12, as in the gasket B. However, the upper plate F10 does not have a curved portion nor flange. Instead, the upper plate F10 is provided with a core F10d, which is formed by bending an end portion of the upper plate F10.

Surrounding the core F10d and an end portion F12a of the lower plate F12 is a grommet F15 having a curved portion F15a and upper and lower flanges F15b, F15c. The grommet F15 protects the core F10d from combustion in the cylinder. The gasket F operates as in the gasket B.

In the gasket of the present invention, the solid portion is formed around the cylinder hole, and at least one bead is situated outside the solid portion. Therefore, the gasket can be tightened strongly, and moreover, the gasket can be resiliently sealed by the bead.

Also, in the present invention, the middle plate is not situated adjacent the cylinder hole. Therefore, the coating material having a low heat resistance but being effective to seal around the fluid holes can be coated onto the middle plate. The fluid holes can be effectively sealed as well.

## Claims

1. A steel laminate gasket for an internal combustion engine having at least one cylinder hole (Hc) and at least one through hole (Hw) therein, said gasket including a first plate (10) having at least one first hole substantially corresponding to the cylinder hole (Hc), a second plate (12) situated under the first plate and having at least one second hole substantially corresponding to the cylinder hole (Hc), at least one third plate (11) situated between the first and second plates and having at least one third hole with a diameter larger than a diameter of the cylinder hole and first means (A 12a) for sealing around the cylinder hole of the engine without elasticity to securely seal around the same, said gasket being characterized in that said gasket further comprises:
second means (A 10a) for covering at least said first means around the first hole to securely seal therearound to thereby form a solid portion around the cylinder hole together with the first means (A 12a), and
third means (A 10c, A 12b) for resiliently sealing around the cylinder hole, said third means being formed on at least one of the first, second and thirst plates outside the second means (A 10a) relative to the cylinder hole (Hc) so that when the gasket is tightened, the first and second means seal around the cylinder hole without elasticity and the third means seals around the cylinder hole with elasticity,
in that said third hole of the third plate (11) is larger than the first and second means, said third plate being situated between the first and second plates without overlapping the first and second means when the first, second and third plates are assembled, and
in that the third plate (11) has sealing layers (13) formed on both sides thereof, said sealing layers being prevented from exposing directly to the cylinder hole.

2. A steel laminate gasket according to claim 1, wherein said first means is a steel plate in the form of a ring (E14).

3. A steel laminate gasket according to claim 2, wherein said first, second and third plates further include holes corresponding to the through hole (Hw) of the engine, respectively, said gasket further comprising fourth means (A 10d, A 12c) for sealing around the through hole formed on at least one of the first, second and third plates.

4. A steel laminate gasket according to claim 1, wherein said sealing layers (13) are made of soft materials to prevent fluid from passing between the plates.

5. A steel laminate gasket according to claim 3, wherein said third means is at least one bead (A 10c, A 12b) situated around the cylinder hole.

6. A steel laminate gasket according to claim 5, wherein said fourth means is at least one bead (A 10d, A 12c) situated around the through hole.

7. A steel laminate gasket according to claim 6, wherein said second means (A 10a) is integrally formed on one of the first and second plates.

8. A steel laminate gasket according to claim 7, wherein said first means (A 12a) is integrally formed with the second plate by bending the same, and said second means includes a curved portion (A 10a) and a flange (A 10b) and is integrally connected to the first plate (10), said curved portion extending from the first plate toward the second plate around the first hole to define the first hole, and said flange extending from the curved portion in the direction away from the first hole, said flange being located underside the second plate, said first means being situated outside the curved portion relative to the first hole.

9. A steel laminate gasket according to claim 8, wherein said third and fourth means are beads (A 10c, A 12b ; A 10d; A 12c) formed on the first and second plates, respectively, said beads extending toward the third plate (11).

10. A steel laminate gasket according to claim 8, wherein said third means (B 10c) is formed on one of the first and second plates, and said fourth means (B 11a) is formed on the third plate.

11. A steel laminate gasket according to claim 7, wherein said second means comprises a curved portion (D 10a) and a flange (D 10b) and is integrally connected to the first plate, said curved portion extending from the first plate toward the second plate around the first hole to define the first hole, said flange extending from said first means being formed by bending a part (D 10d) of the flange to laminate thereon, and said second plate extending adjacent to the curved portion to laminate the flange.

12. A steel laminate gasket according to claim 7, wherein said first means is a laminated ring (E14) having flat upper and lower surfaces, and said second means comprises a curved portion (E10a) and a flange (E10b) and is integrally connected to the first plate, said curved portion extending from the first plate toward the second plate around the first hole to define the first hole, said flange extending from the curved portion in the direction away from the first hole, said first means being situated adjacent to the curved portion to laminate the flange, and said second plate extending toward the curved portion to laminate the flange.

13. A steel laminate gasket according to claim 6, wherein said first means (F10d) is integrally formed with the first plate by bending the same, and said second means is a grommet (F15) having upper and lower flanges, said first means (F10d) and a part (F12a) of the second plate being situated between the upper and lower flanges.

## Patentansprüche

1. Eine Stahllaminatdichtung für eine Brennkraftmaschine, die wenigstens ein Zylinderloch (Hc) und wenigstens ein Durchgangsloch (Hw) darin hat, wobei die Dichtung eine erste Platte (10), die wenigstens ein erstes Loch hat, das im wesentlichen dem Zylinderloch (Hc) entspricht, eine zweite Platte (12), die sich unter der ersten Platte befindet und wenigstens ein zweites Loch hat, das im wesentlichen dem Zylinderloch (Hc) entspricht, und wenigstens eine dritte Platte (11), die sich zwischen der ersten und zweiten Platte befindet und wenigstens ein drittes Loch mit einem Durchmesser hat, der größer als ein Durchmesser des Zylinderlochs ist, und ein erstes Mittel (A12a) zum Abdichten um das Zylinderloch des Motors ohne Elastizität, um sicher um dasselbe herum abzudichten, umfaßt, wobei die Dichtung dadurch **gekennzeichnet** ist, daß die Dichtung weiter umfaßt:
ein zweites Mittel (A10a) zum Abdecken von wenigstens dem ersten Mittel um das erste Loch, um sicher daherum abzudichten, um dadurch einen massiven Teil um das Zylinderloch zusammen mit dem ersten Mittel (A12a) auszubilden, und
ein drittes Mittel (A10c, A12b) zum elastischen Abdichten um das Zylinderloch, wobei das dritte Mittel auf wenigstens einer von der ersten, zweiten und dritten Platte außerhalb des zweiten Mittels (A10a) relativ zu dem Zylinderloch (Hc) so ausgebildet ist, daß, wenn die Dichtung angezogen wird, das erste und zweite Mittel um das Zylinderloch herum ohne Elastizität abdichten und das dritte Mittel um das Zylinderloch mit Elastizität abdichtet,
dadurch, daß das dritte Loch der dritten Platte (11) größer als das erste und zweite Mittel'ist, wobei sich die dritte Platte zwischen der ersten und zweiten Platte befindet, ohne das erste und zweite Mittel zu überlappen, wenn die erste, zweite und dritte Platte zusammengebaut sind, und
dadurch, daß die dritte Platte (11) Abdichtungsschichten (13) hat, die auf beiden Seiten derselben ausgebildet sind, wobei verhindert wird, daß die Abdichtungsschichten direkt zu dem Zylinderloch freiliegen.

2. Eine Stahllaminatdichtung gemäß Anspruch 1, worin das erste Mittel eine Stahlplatte in der Form eines Rings (E14) ist.

3. Eine Stahllaminatdichtung gemäß Anspruch 2, worin die erste, zweite und dritte Platte weiter Löcher aufweisen, die jeweils dem Durchgangsloch (Hw) des Motors entsprechen, wobei die Dichtung weiter ein viertes Mittel (A10d, A12c) zum Abdichten um das Durchgangsloch umfaßt, das auf wenigstens einer von der ersten, zweiten und dritten Platte ausgebildet ist.

4. Eine Stahllaminatdichtung gemäß Anspruch 1, worin die Abdichtungsschichten (13) aus weichen Materialien hergestellt sind, um zu verhindern, daß Fluid zwischen den Platten hindurchgeht.

5. Eine Stahllaminatdichtung gemäß Anspruch 3, worin das dritte Mittel wenigstens eine Wulst (A10c, A12b) ist, die sich um das Zylinderloch herum befindet.

6. Eine Stahllaminatdichtung gemäß Anspruch 5, worin das vierte Mittel wenigstens eine Wulst (A10d, A12c) ist, die sich um das Durchgangsloch herum befindet.

7. Eine Stahllaminatdichtung gemäß Anspruch 6, worin das zweite Mittel (A10a) integral auf einer von der ersten und zweiten Platte ausgebildet ist.

8. Eine Stahllaminatdichtung gemäß Anspruch 7, worin das erste Mittel (A12a) integral mit der zweiten Platte durch Biegen derselben ausgebildet ist, und das zweite Mittel einen gekrümmten Teil (A10a) und einen Flansch (A10b) umfaßt und integral mit der ersten Platte (10) verbunden ist, wobei sich der gekrümmte Teil von der ersten Platte nach der zweiten Platte zu um das erste Loch herum erstreckt, um das erste Loch zu begrenzen, und wobei sich der Flansch von dem gekrümmten Teil in der Richtung weg von dem ersten Loch erstreckt, wobei sich der Flansch unterseitig der zweiten Platte befindet, wobei sich das erste Mittel außerhalb des gekrümmten Teils relativ zu dem ersten Loch befindet.

9. Eine Stahllaminatdichtung gemäß Anspruch 8, worin das dritte und vierte Mittel Wülste (A10c, A12b; A10d, A12c) sind, die auf der ersten bzw. zweiten Platte ausgebildet sind, wobei sich die besagten Wülste nach der dritten Platte (11) zu erstrecken.

10. Eine Stahllaminatdichtung gemäß Anspruch 8, worin das dritte Mittel (B10c) auf einer von der ersten und zweiten Platte ausgebildet ist, und das vierte Mittel (B11a) auf der dritten Platte ausgebildet ist.

11. Eine Stahllaminatdichtung gemäß Anspruch 7, worin das zweite Mittel einen gekrümmten Teil (D10a) und einen Flansch (D10b) umfaßt und integral mit der ersten Platte verbunden ist, wobei sich der gekrümmte Teil von der ersten Platte nach der zweiten Platte zu um das erste Loch herum erstreckt, um das erste Loch zu begrenzen, wobei sich der besagte Flansch von dem gekrümmten Teil in der Richtung weg von dem ersten Loch erstreckt, wobei das erste Mittel durch Biegen eines Teils (D10d) des Flanschs, um darauf zu laminieren, ausgebildet ist, und wobei sich die zweite Platte benachbart dem gekrümmten Teil erstreckt, um den Flansch zu laminieren.

12. Eine Stahllaminatdichtung gemäß Anspruch 7, worin das erste Mittel ein laminierter Ring (E14) ist, der eine flache obere und untere Oberfläche hat, und das zweite Mittel einen gekrümmten Teil (E10a) und einen Flansch (E10b) umfaßt und integral mit der ersten Platte verbunden ist, wobei sich der gekrümmte Teil von der ersten Platte nach der zweiten Platte zu um das erste Loch herum erstreckt, um das erste Loch zu begrenzen, wobei sich der Flansch von dem gekrümmten Teil in der Richtung weg von dem ersten Loch erstreckt, wobei sich das erste Mittel benachbart dem gekrümmten Teil befindet, um den Flansch zu laminieren, und wobei sich die zweite Platte nach dem gekrümmten Teil zu erstreckt, um den Flansch zu laminieren.

13. Eine Stahllaminatdichtung gemäß Anspruch 6, worin das erste Mittel (F10d) integral mit der ersten Platte durch Biegen derselben ausgebildet ist, und das zweite Mittel eine Öse (F15) ist, die einen oberen und unteren Flansch hat, wobei sich das erste Mittel (F10d) und ein Teil (F12a) der zweiten Platte zwischen dem oberen und unteren Flansch befinden.

## Revendications

1. Joint d'étanchéité en acier laminé pour un moteur à combustion interne comportant au moins un trou (Hc) d'un cylindre et au moins un trou traversant (Hw), qui traversent le joint, ledit joint d'étanchéité comprenant une première plaque (10) comportant au moins un premier trou correspondant sensiblement au trou (Hc) du cylindre, une seconde plaque (12) située au-dessus de la première plaque et possédant au moins un second trou correspondant sensiblement au trou (Hc) du cylindre, au moins une troisième plaque (11) située entre les première et seconde plaques et possédant au moins un troisième trou ayant un diamètre supérieur au diamètre du trou du cylindre, et des premiers moyens (A12a) pour établir l'étanchéité autour du trou du cylindre du moteur sans élasticité de manière à réaliser de façon sûre l'étanchéité autour de ce trou, ledit joint d'étanchéité étant caractérisé en ce qu'il comprend en outre :
des seconds moyens (A10a) servant à recouvrir au moins lesdits premiers moyens autour du premier trou pour établir de façon sûre l'étanchéité autour de ce trou de manière à former, conjointement avec les premiers moyens (A12a), une partie solide autour du trou du cylindre, et
des troisièmes moyens (A10c, A12b) pour établir élastiquement l'étanchéité autour du cylindre, lesdits troisièmes moyens étant formés sur au moins l'une des première, seconde et troisième plaques à l'extérieur des seconds moyens (A10a) par rapport au trou (Hc) du cylindre de sorte que, lorsque le joint d'étanchéité est serré, les premiers et seconds moyens établissent l'étanchéité autour du trou du cylindre sans aucune élasticité et des troisièmes moyens établissent l'étanchéité autour du trou du cylindre avec élasticité,
et en ce que ledit troisième trou de la troisième plaque (11) est d'une taille supérieure aux premiers et seconds moyens, ladite troisième plaque étant située entre les première et seconde plaques sans chevauchement des premiers et seconds moyens, lorsque les première, seconde et troisième plaques sont assemblées, et
en ce que la troisième plaque (11) comporte des couches d'étanchéité (13) formées sur ses deux faces, lesdites couches d'étanchéité ne pouvant pas être exposées directement au trou du cylindre.

2. Joint d'étanchéité en acier laminé selon la revendication 1, dans lequel lesdits premiers moyens sont formés par une plaque d'acier possédant la forme d'un anneau (E14).

3. Joint d'étanchéité en acier laminé selon la revendication 2, dans lequel lesdites première, seconde et troisième plaques comportent en outre des trous correspondant respectivement au trou traversant (Hw) du moteur, ledit joint d'étanchéité comprenant en outre des quatrièmes moyens (A10d, A12c) pour établir l'étanchéité autour du trou traversant formé dans au moins l'une des première, seconde et troisième plaques.

4. Garniture d'étanchéité en acier laminé selon la revendication 1, dans laquelle lesdites couches d'étanchéité (13) sont réalisées en des matériaux mous de manière à empêcher qu'un fluide ne passe entre les plaques.

5. Garniture d'étanchéité en acier laminé selon la revendication 3, dans laquelle lesdits troisièmes moyens sont constitués par une nervure (A10e, A12b) située autour du trou du cylindre.

6. Joint d'étanchéité en acier laminé selon la revendication 5, dans lequel lesdits quatrièmes moyens sont constitués par au moins une nervure (A10d, A12c) disposée autour du trou traversant.

7. Joint d'étanchéité en acier laminé selon la revendication 6, dans lequel lesdits seconds moyens (A10a) sont formés d'un seul tenant sur l'une des première et seconde plaques.

8. Joint d'étanchéité en acier laminé selon la revendication 7, dans lequel lesdits premiers moyens (A12a) sont formés d'un seul tenant avec la seconde plaque par pliage de cette dernière, et lesdits seconds moyens comprennent une partie courbe (A10a) et une bride (A10b) est raccordée d'un seul tenant à la première plaque (10), ladite partie courbe s'étendant depuis la première plaque en direction de la seconde plaque autour du premier trou de manière à définir le premier trou, et ladite bride s'étendant depuis la partie courbe dans la direction tournée à l'opposé du premier trou, ladite bride étant située contre la face inférieure de la seconde plaque, lesdits premiers moyens étant situés à l'extérieur de la partie courbe par rapport au premier trou.

9. Joint d'étanchéité en acier laminé selon la revendication 8, dans lequel lesdits troisièmes et quatrièmes moyens (A10c, A12b; A10d, A12c), formés respectivement sur les première et seconde plaques, lesdites nervures s'étendant en direction de la troisième plaque (11).

10. Joint d'étanchéité en acier laminé selon la revendication 8, dans lequel lesdits troisièmes moyens (B10c) sont formés sur l'une des première et seconde plaques, et lesdits quatrièmes moyens (B11a) sont formés sur la troisième plaque.

11. Joint d'étanchéité en acier laminé selon la revendication 7, dans lequel lesdits seconds moyens comprennent une partie courbe (D10a) et une bride (D10b) et sont raccordés d'un seul tenant à la première plaque, ladite partie courbe s'étendant à partir de la première plaque en direction de la seconde plaque autour du premier trou pour définir le premier trou, ladite bride s'étendant à partir de la partie courbe dans une direction s'écartant du premier trou, lesdits premiers moyens étant formés par pliage d'une partie (D10d) de la bride pour que cette dernière s'applique sur elle-même, et ladite seconde plaque s'étendant au voisinage de la partie courbe pour s'appliquer sur la bride.

12. Joint d'étanchéité en acier laminé selon la revendication 7, dans lequel lesdits premiers moyens sont formés par un anneau laminé (E4) possédant des surfaces supérieure et inférieure planes, et lesdits seconds moyens comprennent une partie courbe (E10a) et une bride (E10b) qui sont raccordées d'un seul tenant à la première plaque, ladite partie courbe s'étendant depuis la première plaque en direction de la seconde plaque autour du premier trou pour définir le premier trou, ladite bride s'étendant depuis la partie courbe dans une direction s'écartant du premier trou, lesdits premiers moyens étant situés au voisinage de la partie courbe pour s'appliquer sur la bride elle-même, et ladite seconde plaque s'étendant en direction de la partie courbe pour s'appliquer sur la bride.

13. Joint d'étanchéité en acier laminé selon la revendication 6, dans lequel lesdits premiers moyens (F10d) sont formés d'un seul tenant avec la première plaque par pliage de cette dernière, et lesdits seconds moyens sont formés par un oeillet (F15) possédant des brides supérieure et inférieure, lesdits premiers moyens (F10d) et une partie (F12a) de la seconde plaque étant situés entre les brides supérieure et inférieure.
